# EUROPEAN PATENT APPLICATION

(11) **EP 1 509 053 A1**
(43) Date of publication of application: **23.02.2005**
(21) Application number: 03730708.9
(22) Date of filing: 30.05.2003
(51) Int. Cl.: H04Q 7/38, H04L 12/56

(54) **SCHEDULING DEVICE AND COMMUNICATION METHOD**

(30) Priority: 30.05.2002 JP 2002158190
(71) Applicant: MATSUSHITA ELECTRIC INDUSTRIAL CO., LTD., Kadoma-shi, Osaka 571-8501 (JP)
(72) Inventor: ARIMA, Takenobu, Yokohama-shi, Kanagawa 236-0042 (JP); MIYA, Kazuyuki, Tokyo 156-0052 (JP)
(74) Representative: Grünecker, Kinkeldey, Stockmair & Schwanhäusser Anwaltssozietät
(86) International application number: PCT/JP2003/006810
(87) International publication number: WO 2003/103330

(57) **Abstract**

An fD detector 104 detects a maximum Doppler frequency from a received signal and outputs to a schedule creating section 105. The schedule creating section 105 determines, for each user, a time (or order) at which to transmit packet data thereto from the maximum Doppler frequencies detected by the fD detector 104, and outputs to a switch circuit 107 and a multiplexing section 108 schedule information indicating these times at which to transmit the packets of data. The switch circuit 107 sequentially outputs the packets of data to be transmitted to the respective users to an encoding section 109 according to the schedule created by the schedule creating section 105. The multiplexing section 108 multiplexes the schedule for transmitting the packets of data, output from the schedule creating section 105 and control data necessary for transmitting packet data on a common channel, and outputs to the encoding section 109.

## Description

### TECHNICAL FIELD

The present invention relates to a scheduling apparatus and a communication method, and particularly to a scheduling apparatus and a communication method suitable to be used for HSDPA (High Speed Downlink Packet Access).

### BACKGROUND ART

In CDMA (Code Division Multiple Access), which is one of access schemes for digital radio communication systems, a W-CDMA (Wideband-CDMA) system is included. In the W-CDMA standards, an HS-DSCH (High Speed Downlink Shared CHannel) is specified as a downlink channel shared by a plurality of communication terminal apparatuses.

This HS-DSCH is a channel that is assigned to a plurality of terminals in terms of a predetermined transmission unit of, e.g., 2 ms and that transmits only data, and is for communicating data. Hence, the HS-DSCH is expected to be used for downlink, high-speed packet data transmission.

Communication terminal apparatuses using the HS-DSCH set up respective other downlink channels (DPCHs: Dedicated Physical CHannels), and perform path search and channel estimation by using known signals (for example, pilot signals) contained in those DPCH signals. Alternatively, the communication terminal apparatuses perform the path search and channel estimation by using known signals contained in a P-CPICH (Primary-Common PIlot CHannel) common to them. By this means, the HS-DSCH signal can be certainly demodulated.

Furthermore, the HS-DSCH channel is a communication method that can improve average throughput by changing channel codec, spreading factor, the number of multiplexes, or multi-value modulation and thus the transmission rate, corresponding to the link state.

However, when the maximum Doppler frequency of fading is high due to, for example, high speed movement of the communication partner, the transmission path conidtion that is measured at his moving communication terminal apparatus in order to create the schedule for transmit data may be different from the transmission path conidtion where the moving communication terminal apparatus receives data transmitted from a base station apparatus based on the measuring result. Thus, the transmitted data may not be received correctly.

Moreover, when the Fading Doppler frequency is low and the transmission path conidtion remains poor, if the transmit data is retransmitted, the transmit data cannot be correctly transmitted either, and thus the problem occurs that the retransmission of the transmit data is repeated, thereby lowering throughput.

### DISCLOSURE of INVENTION

An object of the present invention is to provide a scheduling apparatus and communication method that improves throughput.

The object is achieved by determining the order in which to transmit packet data based on the changes in the transmission path conidtions, specifically, by transmitting packet data earlier to a communication partner whose transmission path conidtion changes rapidly and later to a communication partner whose transmission path conidtion changes slowly.

### BRIEF DESCRIPTION OF THE DRAWINGS

FIG. 1 is a block diagram showing the configuration of a base station apparatus according to embodiment 1 of the present invention;
FIG. 2 is a view showing an example of the priority in the order of packet data transmission by the base station apparatus of the above embodiment;
FIG. 3 is a block diagram showing the configuration of a base station apparatus according to embodiment 2 of the present invention;
FIG. 4 is a view showing an example of the priority in the order of packet data transmission by a conventional base station apparatus;
FIG. 5 is a view showing an example of the priority in the order of packet data transmission by the base station apparatus of the above embodiment;
FIG. 6 is a view showing an example of the priority in the order of packet data transmission by the base station apparatus of the above embodiment;
FIG. 7 is a block diagram showing the configuration of a base station apparatus according to embodiment 3 of the present invention;
FIG. 8 is a view showing an example of receive qualities in the base station apparatus of the above embodiment;
FIG. 9 is a view showing an example of the priority in the order of packet data transmission by the base station apparatus of the above embodiment;
FIG. 10 is a view showing examples of the change in a transmission path conidtion;
FIG. 11 is a block diagram showing the configuration of a base station apparatus according to embodiment 4 of the present invention; and
FIG. 12 is a view showing an example of the priority in the order of packet data transmission by the base station apparatus of the above embodiment.

### Best Mode for Carrying out the Invention

The essence of the present invention is to determine the order in which to transmit packet data based on the changes in the transmission path conidtions, and specifically, to transmit packet data earlier to a communication partner whose transmission path conidtion changes rapidly and later to a communication partner whose transmission path conidtion changes slowly.

Embodiments of the present invention will be described in detail below with reference to the drawing.

### (Embodiment 1)

In the present embodiment, the speed of the change in the transmission path conidtion is detected from the Fading Doppler frequency measured, and thus the order in which to transmit packet data is determined. For example, when the change in the relative distance with a communication partner is large, that is, the Fading Doppler frequency is high, the change in the transmission path conidtion is large. Accordingly, after conditions for transmission are determined, packet data is transmitted earlier before the transmission path conidtion changes.

On the other hand, when the change in the relative distance with a communication partner is small, that is, the Fading Doppler frequency is low, the change in the transmission path conidtion is small. Hence, it has little effect on the receive side whether packet data is transmitted earlier or later.

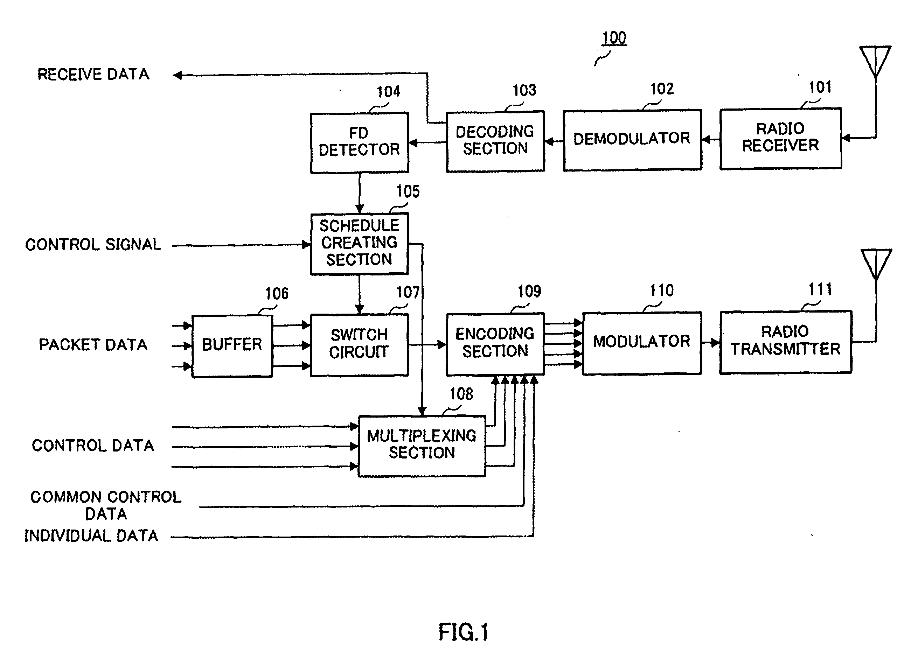

FIG. 1 is a block diagram showing the configuration of a base station apparatus according to embodiment 1 of the present invention. In FIG. 1, a base station apparatus 100 basically comprises a radio receiver 101, a demodulator 102, a decoding section 103, an fD detector 104, a schedule creating section 105, a buffer 106, a switch circuit 107, a multiplexing section 108, an encoding section 109, a modulator 110, and a radio transmitter 111.

The radio receiver 101 receives a radio signal transmitted from a communication partner, converts it to a base band frequency, and outputs the obtained received signal to the demodulator 102. The demodulator 102 demodulates the received signal and outputs to the decoding section 103. The decoding section 103 decodes the demodulated received signal and outputs to the fD detector 104.

The fD detector 104 detects a maximum Doppler frequency from the decoded received signal and outputs to the schedule creating section 105.

The schedule creating section 105 determines, for each user, a time (or order) at which to transmit packet data thereto from the maximum Doppler frequencies detected by the fD detector 104, and outputs to the switch circuit 107 and the multiplexing section 108 schedule information indicating these times at which to transmit the packets of data.

The buffer 106 temporarily stores the packet of data to be transmitted on a common channel to each user and then outputs to the switch circuit 107. The switch circuit 107 sequentially outputs the packets of data to be transmitted to the respective users to the encoding section 109 according to the schedule created by the schedule creating section 105.

The multiplexing section 108 multiplexes the schedule for transmitting the packets of data, output from the schedule creating section 105 and control data necessary for transmitting packet data on the common channel, and outputs to the encoding section 109.

For example, when transmitting packet data for a plurality of users in time multiplex, an Associated DPCH is necessary as an up- and down-link channel for transmission of control data necessary for transmitting packet data, in addition to the HS-DSCH used for transmission of the packet data.

The encoding section 109 encodes packet data output from the switch circuit 107 and data output from the multiplexing section 108 individually and outputs to the modulator 110. Furthermore, the encoding section 109 encodes individual data such as voice data, non-restriction data, and packet data to be transmitted on the individual channel and common control data individually, and outputs to the modulator 110.

The modulator 110 modulates and spreads individually those data output from the encoding section 109, multiplexes those modulated spread data, and outputs to the radio transmitter 111. The radio transmitter 111 converts the data output from the modulator 110 to a radio frequency signal and transmits the radio signal.

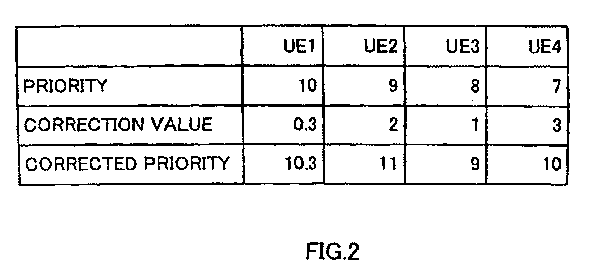

Next, the operation of the base station apparatus according to the present embodiment creating the schedule will be described. FIG. 2 is a view showing an example of the priority in order of which the base station apparatus of the present embodiment transmits packets of data. In FIG. 2, the priority is determined from values such as CIRs indicating the transmission path conidtions. It is assumed that, for example, the priority for data to be transmitted to UE1 is "10", the priority for UE2 is "9", the priority for UE3 is "8", and the priority for UE4 is "7".

In the case of a conventional base station apparatus, data for the UE1, UE2, UE3, and UE4 is transmitted in descending order of the priority shown above. The base station apparatus of the present embodiment adds correction values obtained from the Fading Doppler frequencies to the priorities, and transmits data to the communication terminal apparatuses in descending order of the corrected priorities.

For example, it is assumed that, as results of the fD detector 104 of the base station apparatus measuring the Fading Doppler frequency of each UE, the Fading Doppler frequency of UE1 is 30 Hz, the Fading Doppler frequency of UE2 is 200 Hz, the Fading Doppler frequency of UE3 is 100 Hz, and the Fading Doppler frequency of UE4 is 300 Hz.

The schedule creating section 105 takes the product of 0.01 times the Fading Doppler frequency as the correction value for the corresponding priority. Then, the correction value for UE1 is "0.3", the correction value for UE2 is "2", the correction value for UE3 is "1", and the correction value for UE4 is "3". The schedule creating section 105 adds these correction values to the priorities respectively, and creates a schedule to transmit data earlier to a communication terminal apparatus having a higher corrected priority.

In this example, the corrected priority for UE1 is "10.3", the corrected priority for UE2 is "11", the corrected priority for UE3 is "9", and the corrected priority for UE4 is "10".

Then, the schedule creating section 105 creates a schedule to transmit data in descending order of the corrected priorities, that is, in the order of UE2, UE1, UE4, and UE3.

As described above, according to the base station apparatus of the present embodiment, data is transmitted earlier to a communication terminal apparatus having a higher Fading Doppler frequency and data is transmitted later to a communication terminal apparatus having a lower Fading Doppler frequency. Thus, throughput can be improved.

### (Embodiment 2)

In radio communication, because the transmission path conidtion may vary from the time of first data transmission to the time of retransmission, the transmit data may not be able to be correctly retransmitted under the same communication scheme. A conceivable method for correctly transmitting data is to change the modulation scheme and encoding rate to retransmit the transmit data, but when re-transmitting, the transmit data needs to be encoded again, thus increasing the processing amount and delay time and thereby lowering throughput.

In the present embodiment of the invention, without changing the modulation scheme and encoding rate for the transmit data, the schedule according to which data is transmitted is created taking into account the changes in the transmission path conidtions estimated from the Fading Doppler frequencies measured.

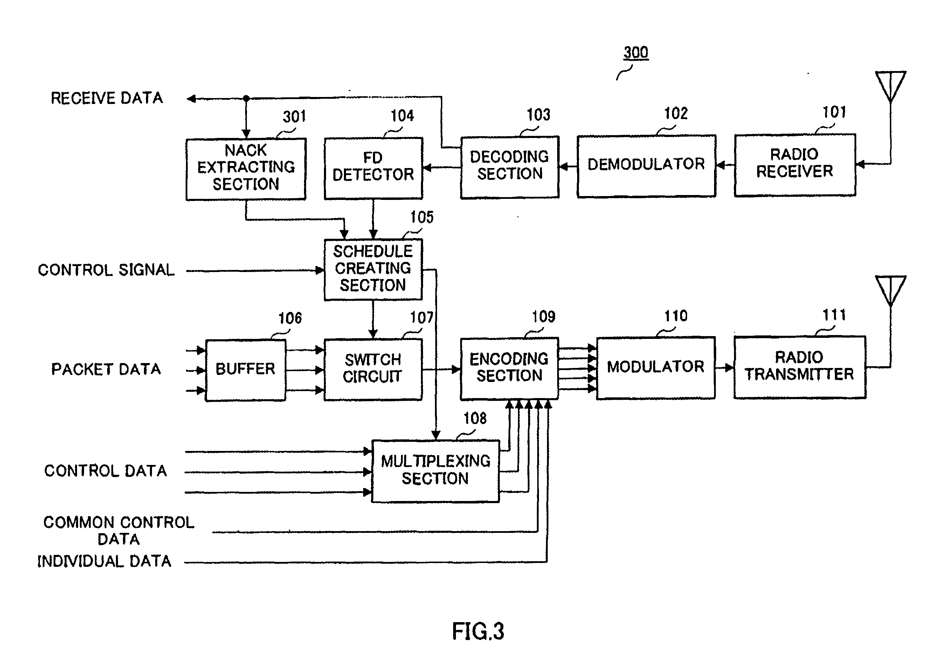

FIG. 3 is a block diagram showing the configuration of a base station apparatus according to embodiment 2 of the present invention. The same constituents as in FIG. 1 are indicated by the same reference numerals as in FIG. 1, and a description thereof is omitted. A base station apparatus 300 of FIG. 3 comprises an NACK extracting section 301 and a schedule creating section 302, and is different from the base station apparatus of FIG. 1 in that the apparatus 300 creates a schedule to transmit data including retransmit data.

The decoding section 103 decodes a received signal and outputs to the fD detector 104 and the NACK extracting section 301.

The fD detector 104 detects a maximum Doppler frequency from the decoded received signal and outputs to the schedule creating section 302. The NACK extracting section 301 extracts an NACK signal requesting to retransmit data from the decoded received signal. If the NACK signal is detected, the NACK extracting section 301 outputs a request to retransmit data to the schedule creating section 302.

The schedule creating section 302 determines, for each user, a time (or order) at which to transmit packet data thereto from the maximum Doppler frequencies detected by the fD detector 104, and outputs to the switch circuit 107 and the multiplexing section 108 schedule information indicating these times at which to transmit the packets of data. When having received a request to retransmit data from the NACK extracting section 301, the schedule creating section 302 determines, for each user, a time (or order) at which to transmit packet data thereto from the maximum Doppler frequencies, the packets of data including the data to be retransmitted, and outputs to the switch circuit 107 and the multiplexing section 108 schedule information indicating these times at which to transmit the packets of data.

The buffer 106 temporarily stores the packet of data to be transmitted on a common channel to each user and then outputs to the switch circuit 107. The switch circuit 107 sequentially outputs the packets of data to be transmitted to the respective users to the encoding section 109 according to the schedule created by the schedule creating section 302.

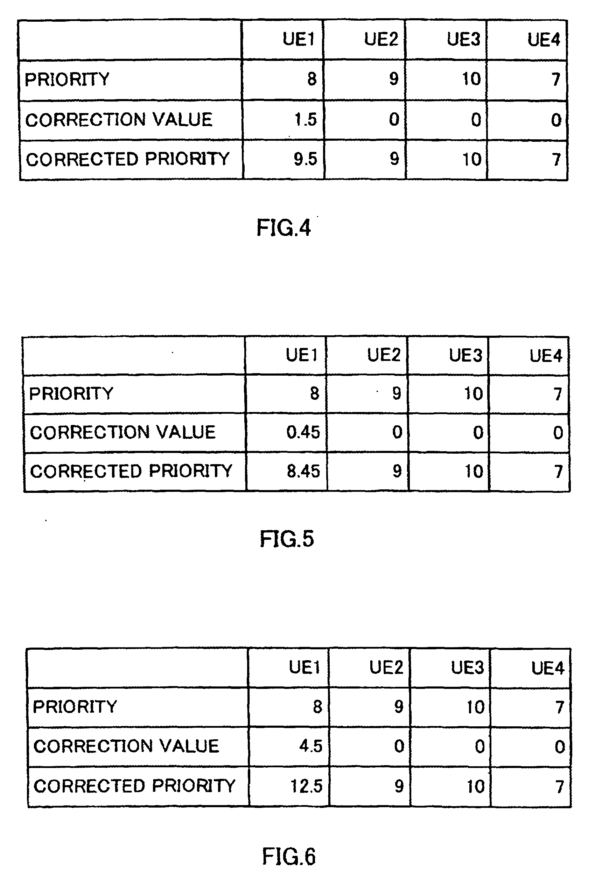

Next, the operation of the base station apparatus according to the present embodiment creating the schedule will be described. FIG. 4 is a view showing an example of the priority in order of which the base station apparatus of the present embodiment transmits packets of data. In FIG. 4, the priority is determined from values such as CIRs indicating the transmission path conidtions. It is assumed that, for example, the priority for data to be transmitted to UE1 is "8", the priority for UE2 is "9", the priority for UE3 is "10", and the priority for UE4 is "7". Furthermore, the data for UE1 is assumed to be data to be retransmitted.

In the case of a conventional base station apparatus, the priority for UE1 to which to retransmit is corrected, and data is transmitted to the communication terminal apparatuses in descending order of the corrected priorities. For example, a correction value of "1.5" is added to the priority of "8" for UE1 to which to retransmit, so that the priority for UE1 becomes "9.5". Then, data is transmitted in descending order of the corrected priorities: the order of UE3, UE1, UE2, and UE4.

The base station apparatus of the present embodiment multiplies the correction value by a correction value obtained from the Fading Doppler frequency, corrects the priority, and transmits data to the communication terminal apparatuses in descending order of the corrected priorities.

First, the case will be explained where the Fading Doppler frequency of a UE to which to retransmit is low. FIG. 5 is a view showing an example of the priority in order of which the base station apparatus of the present embodiment transmits packets of data. FIG. 5 shows an example of the priority in the case where the Fading Doppler frequency of UE1 is 30 Hz.

The schedule creating section 302 multiplies the correction value of "1.5" for the communication terminal apparatus to which to retransmit by the product of 0.01 times the Fading Doppler frequency to obtain a correction value, and adds the obtained correction value to the priority for the communication terminal apparatus UE1 to which to retransmit. In this example, the correction value of "1.5" for re-transmitting is multiplied by the product of 0.01 times the Fading Doppler frequency of "30", which product is 0.3, to obtain a correction value of "0.45".

Then, the schedule creating section 302 adds the correction value of "0.45" to the priority of "8" for UE1. As a result, the priority for UE1 becomes "8.45".

The schedule creating section 302 creates a schedule to transmit data to the communication terminal apparatuses in descending order of the corrected priorities. In this example, after the correction, the corrected priority for UE1 is "8.45", the priority for UE2 is "9", the priority for UE3 is "10", and the priority for UE4 is "7".

Then, the schedule creating section 302 creates a schedule to transmit data in descending order of the corrected priorities, that is, in the order of UE3, UE2, UE1, and UE4.

As described above, when the Fading Doppler frequency is low, the change in the transmission path condition is gradual, and accordingly with slight correction of the priority for re-transmitting, the time when to retransmit is arranged to become later. Thus, it is possible to retransmit data at a time when the transmission path conidtion is likely to be good enough. As a result, the possibility of correctly receiving the retransmitted data increases.

Next, the case will be explained where the Fading Doppler frequency of a UE to which to retransmit is high. FIG. 6 is a view showing an example of the priority in order of which the base station apparatus of the present embodiment transmits packets of data. FIG. 6 shows an example of the priority in the case where the Fading Doppler frequency of UE1 is 300 Hz.

The schedule creating section 302 multiplies the correction value of "1.5" for the communication terminal apparatus to which to retransmit by the product of 0.01 times the Fading Doppler frequency to obtain a correction value, and adds the obtained correction value to the priority for the communication terminal apparatus UE1 to which to retransmit. In this example, the correction value of "1.5" for re-transmitting is multiplied by the product of 0.01 times the Fading Doppler frequency of "300", which product is 3, to obtain a correction value of "4.5".

Then the schedule creating section 302 adds the correction value of "4.5" to the priority of "8" for UE1. As a result, the priority for UE1 becomes "12.5".

The schedule creating section 302 creates a schedule to transmit data to the communication terminal apparatuses in descending order of the corrected priorities. In this example, after the correction, the corrected priority for UE1 is "12.5", the priority for UE2 is "9", the priority for UE3 is "10", and the priority for UE4 is "7".

Then, the schedule creating section 302 creates a schedule to transmit data in descending order of the corrected priorities, that is, in the order of UE1, UE3, UE2, and UE4.

As described above, when the Fading Doppler frequency is high, the change in the transmission path conidtion is rapid. Accordingly, with great correction of the priority for re-transmitting, the time when to retransmit is arranged to become earlier, and thus it is possible to retransmit data at a time when the transmission path conidtion rapidly changing becomes good. As a result, the possibility of correctly receiving the retransmitted data increases.

Moreover, data for a user with a high Fading Doppler frequency can be transmitted with a raised priority while lowering the priority for a user with a low Fading Doppler frequency. That is, because of being able to retransmit with a shorter delay time, receive probability can be raised without changing the modulation scheme and encoding rate for re-transmitting, thereby improving throughput.

As described above, according to the base station apparatus of the present embodiment, data addressed to a communication terminal apparatus having a higher Fading Doppler frequency is retransmitted earlier thereto and data addressed to a communication terminal apparatus having a lower Fading Doppler frequency is retransmitted later thereto. Thus, throughput can be improved.

Note that when a packet to be retransmitted has an allowable delay time set for it, the base station apparatus of the present invention creates a schedule to retransmit the packet within the allowable delay time after the packet is first transmitted. Hence, the packet is retransmitted within the predetermined delay time.

### (Embodiment 3)

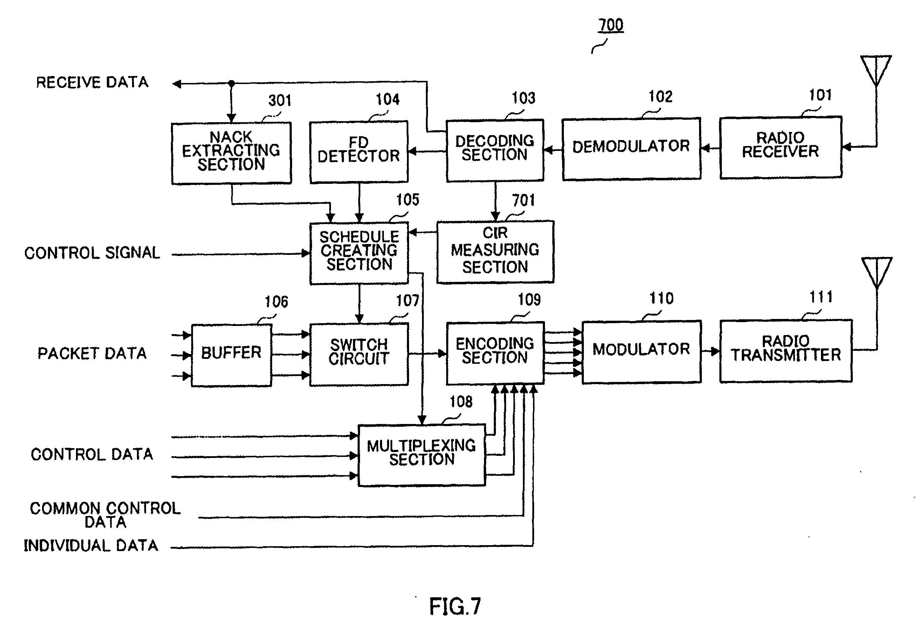

FIG. 7 is a block diagram showing the configuration of a base station apparatus according to embodiment 3 of the present invention. The same constituents as in FIGS. 1 and 3 are indicated by the same reference numerals as in FIGS. 1 and 3, and a description thereof is omitted. A base station apparatus 700 of FIG. 7 comprises a CIR measuring section 701 and a schedule creating section 702, and is different from the base station apparatus of FIG. 1 in that the apparatus 700 creates a schedule to transmit by using the change in receive quality of the received signal.

The decoding section 103 decodes a received signal and outputs to the fD detector 104, the NACK extracting section 301, and the CIR measuring section 701. The fD detector 104 detects a maximum Doppler frequency from the decoded received signal and outputs to the schedule creating section 702. The NACK extracting section 301 extracts an NACK signal requesting to retransmit data from the decoded received signal. If the NACK signal is detected, the NACK extracting section 301 outputs a request to retransmit data to the schedule creating section 702.

The CIR measuring section 701 measures the receive quality of the received signal such as CIR and outputs the measuring result to the schedule creating section 702.

The schedule creating section 702 determines, for each user, a time (or order) at which to transmit packet data thereto from the maximum Doppler frequencies detected by the fD detector 104 and the receive qualities measured by the CIR measuring section 701, and outputs to the switch circuit 107 and the multiplexing section 108 schedule information indicating these times at which to transmit the packets of data. When having received a request to retransmit data from the NACK extracting section 301, the schedule creating section 702 determines, for each user, a time (or order) at which to transmit packet data thereto from the maximum Doppler frequencies, the packets of data including the data to be retransmitted, and outputs to the switch circuit 107 and the multiplexing section 108 schedule information indicating these times at which to transmit the packets of data.

The buffer 106 temporarily stores the packet of data to be transmitted on a common channel to each user and then outputs to the switch circuit 107. The switch circuit 107 sequentially outputs the packets of data to be transmitted to the respective users to the encoding section 109 according to the schedule created by the schedule creating section 702.

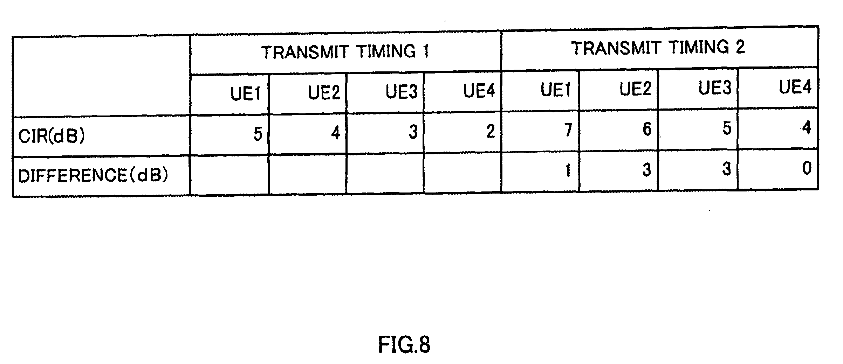

Next, the operation of the base station apparatus according to the present embodiment creating the schedule will be described. In the base station apparatus 700 of the present embodiment, the CIR measuring section 701 measures the CIRs of received signals and the schedule creating section 702 corrects the priorities by using the variations of the CIRs. Here, an example will be explained where packets of data are transmitted to UE1, UE2, UE3, and UE4, a packet of data is not correctly received at UE4, and then the base station apparatus 700 retransmits the packet of data to UE4. FIG. 8 is a view showing an example of the receive qualities in the base station apparatus of the present embodiment.

FIG. 8 shows the CIRs of the received signals used in determining transmit schemes for transmit timing 1, a time when to transmit data, and transmit timing 2, a next time when to transmit. In FIG. 8, at transmit timing 1, the CIR of the signal transmitted from UE1 is 5 dB, and the CIRs of the signals transmitted from UE2, UE3, and UE4 is 4 dB, 3 dB, and 2 dB respectively.

And at transmit timing 2, the CIR of the signal transmitted from UE1 is 6 dB, and the CIRs of the signals transmitted from UE2, UE3, and UE4 is 7 dB, 6 dB, and 2 dB respectively.

For UE1, the difference between the CIRs at transmit timings 1 and 2 is 1 dB. The difference in CIR for UE2 is 3 dB, the difference in CIR for UE3 is 3 dB, and the difference in CIR for UE4 is 0 dB.

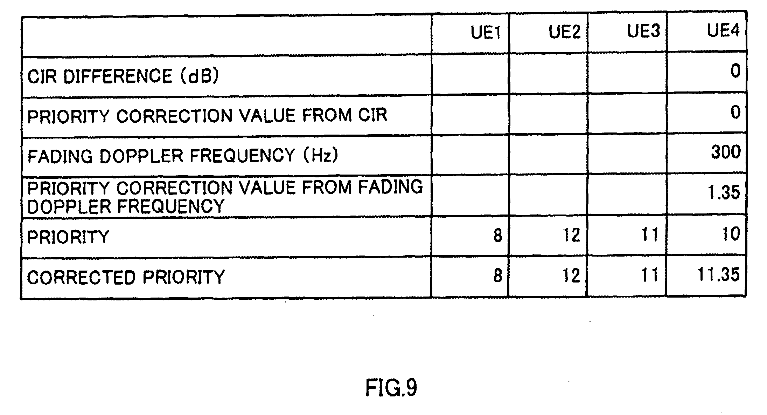

The schedule creating section 702 determines the priority for packet data to be retransmitted taking into account the CIR differences, and then determines a transmit timing when to transmit the packet data. FIG. 9 is a view showing an example of the priority in order of which the base station apparatus of the present embodiment transmits packets of data.

The schedule creating section 702 calculates a correction value for the priority for UE4 to which to retransmit packet data from the difference in CIR of FIG. 8. For example, the schedule creating section 702 multiplies the difference in CIR by a weight (e.g., 0.7) related to a correction value from the Fading Doppler frequency and then multiplies by a predetermined value (e.g., 1.5) to obtain a correction value for the priority for re-transmitting. In the example of FIG. 9, because the difference in CIR for UE4 is 0 dB, the correction value for the priority is "0".

Furthermore, the schedule creating section 702 calculates the Fading Doppler frequency multiplied by a predetermined value as a correction value. For example, the schedule creating section 702 calculates the product of 0.01 times the Fading Doppler frequency. Further, the schedule creating section 702 multiplies the product by a weight related to the correction value from the CIR. The schedule creating section 702 multiplies the product by, for example, 0.3 and multiplies by a predetermined value (e.g., 1.5) to obtain a correction value for the priority for re-transmitting.

It is assumed that the Fading Doppler frequency of UE4 is 300 Hz. The schedule creating section 702 multiplies this Fading Doppler frequency by "0.01", "0.3", and "1.5" to obtain a correction value of "1.35".

Then, the schedule creating section 702 adds the correction values from the CIR difference and the Fading Doppler frequency to the priority for UE4.

In FIG. 9, the priority for UE1 is "8", the priority for UE2 is "12", the priority for UE3 is "11", and the priority for UE4 is "10". The schedule creating section 702 adds the correction values of "0" and "1.35" to the priority of "10" for UE4 to which to retransmit packet data. As a result, the priority for UE4 becomes "11.35".

The schedule creating section 702 determines the order in which to transmit packet data to the UEs so as to transmit in descending order of the corrected priorities. In this example, a schedule to transmit packets of data in the order of UE2, UE4, UE3, and UE1 is created.

As described above, according to the base station apparatus of the present embodiment, a schedule to transmit is created using the change in receive quality of the received signal, and thus throughput can be improved.

### (Embodiment 4)

In embodiment 2, data addressed to a communication terminal apparatus having a higher Fading Doppler frequency is retransmitted earlier thereto and data addressed to a communication terminal apparatus having a lower Fading Doppler frequency is retransmitted later thereto, thus improving throughput.

In the case where the Fading Doppler frequency is even higher such that the cycle in which the transmission path conidtion changes is shorter than a unit of transmit-time, the transmission path conidtion may have deteriorated when data addressed to a communication terminal apparatus having a higher Fading Doppler frequency is retransmitted earlier thereto.

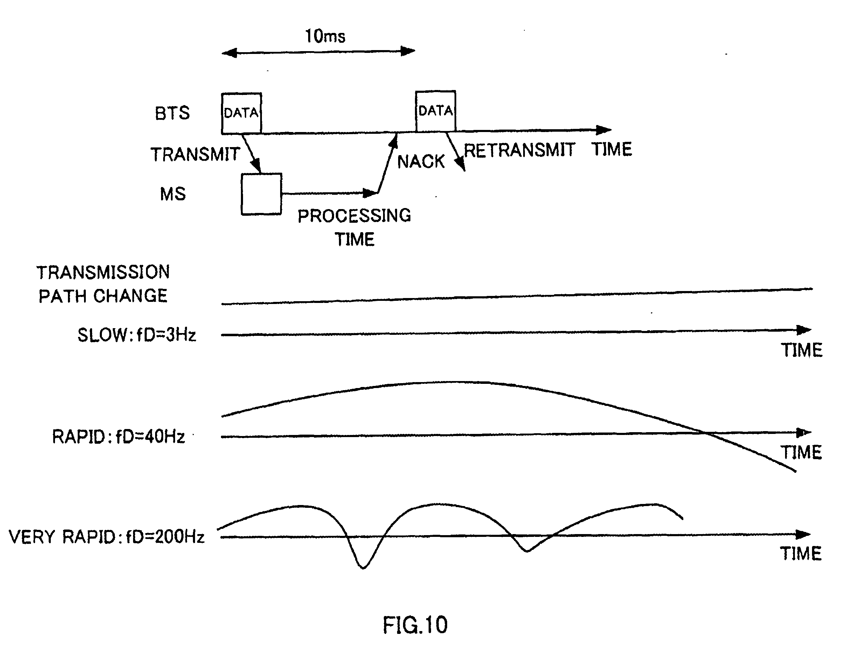

FIG. 10 shows examples of the change in the transmission path conidtion. FIG. 10 illustrates the case where a base station apparatus (BS) transmits data to a communication terminal apparatus (MS) and the communication terminal apparatus finds an error in the received data, thus transmitting a request to retransmit (NACK). In FIG. 10, the abscissa represents time and the ordinate represents the transmission path conidtion.

In the examples of FIG. 10, it takes 10 ms, the shortest interval, from when the base station apparatus transmits data until re-transmitting. When the Fading Doppler frequency is low (3 Hz) or high (40 Hz), by transmitting at the data retransmit timing of FIG. 10, data can be retransmitted before the transmission path conidtion deteriorates.

However, in the case where the Fading Doppler frequency is very high (200 Hz), the transmission path conidtion has deteriorated even when transmitting at the retransmit timing with the shortest interval as shown in FIG. 10.

In embodiment 4, the way of creating a schedule will be explained for the case where the Fading Doppler frequency is very high.

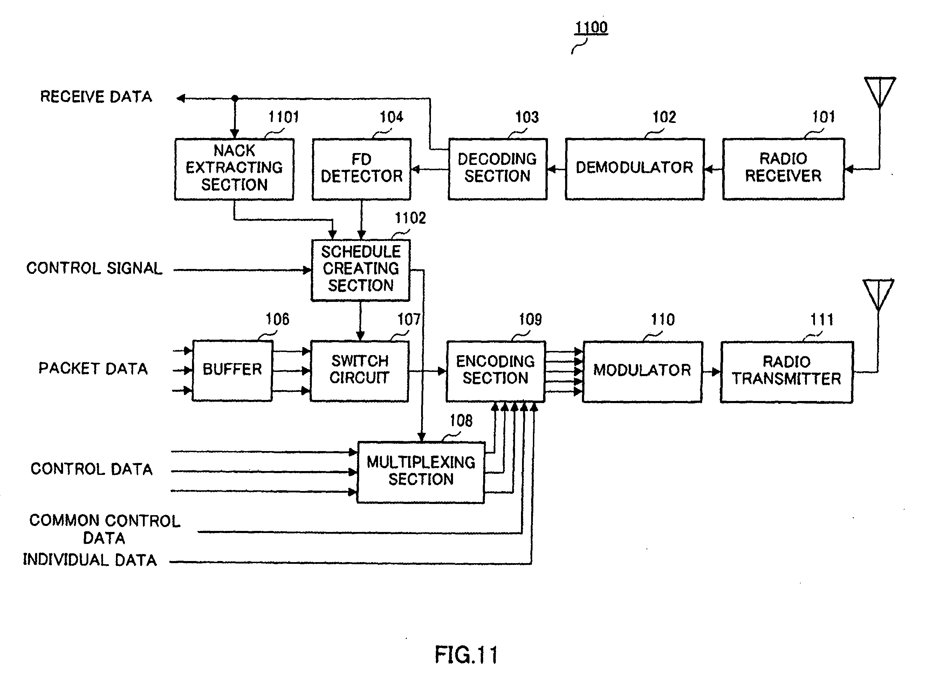

FIG. 11 is a block diagram showing the configuration of a base station apparatus according to embodiment 4 of the present invention. The same constituents as in FIG. 1 are indicated by the same reference numerals as in FIG. 1, and a description thereof is omitted. A base station apparatus 1100 of FIG. 11 comprises an NACK extracting section 1101 and a schedule creating section 1102, and is different from the base station apparatus of FIG. 1 in that the apparatus 1100 creates a schedule to transmit by determining whether to transmit to-be-retransmitted data earlier or not from the Fading Doppler frequency.

The decoding section 103 decodes the received signal and outputs to the fD detector 104 and the NACK extracting section 1101.

The fD detector 104 detects a maximum Doppler frequency from the decoded received signal and outputs to the schedule creating section 1102. The NACK extracting section 1101 extracts an NACK signal requesting to retransmit data from the decoded received signal. If the NACK signal is detected, the NACK extracting section 1101 outputs a request to retransmit data to the schedule creating section 1102.

The schedule creating section 1102 determines, for each user, a time (or order) at which to transmit packet data thereto from the maximum Doppler frequencies detected by the fD detector 104, and outputs to the switch circuit 107 and the multiplexing section 108 schedule information indicating these times at which to transmit packet data. When having received a request to retransmit data from the NACK extracting section 1101, the schedule creating section 1102 determines whether to raise the priority for to-be-retransmitted data to transmit earlier or not from the Fading Doppler frequency, and outputs to the switch circuit 107 and the multiplexing section 108 schedule information indicating these times at which to transmit packet data.

Specifically, for example, when the cycle of the Fading Doppler is longer than the time interval between when transmitting and a next time when to retransmit, the schedule creating section 1102 creates a schedule to transmit earlier by higher priority as the Fading Doppler frequency becomes higher. For example, a correction value of 1.5×fD×0.01, where fD (Hz) is the Fading Doppler frequency, is added to the priority.

Moreover, for example, when the cycle of the Fading Doppler is shorter than a unit of transmit-time and longer than half the unit of transmit-time, the schedule creating section 1102 creates a schedule to transmit earlier by higher priority as the Fading Doppler frequency becomes lower. For example, a correction value of 1.5-{1.5×(fD-100)×0.01}, where fD (Hz) is the Fading Doppler frequency, is added to the priority.

When the cycle of the Fading Doppler is shorter than half the unit of transmit-time, the schedule creating section 1102 does not correct the priority based on the Fading Doppler frequency.

The buffer 106 temporarily stores the packet of data to be transmitted on a common channel to each user and then outputs to the switch circuit 107. The switch circuit 107 sequentially outputs the packets of data to be transmitted to the respective users to the encoding section 109 according to the schedule created by the schedule creating section 1102.

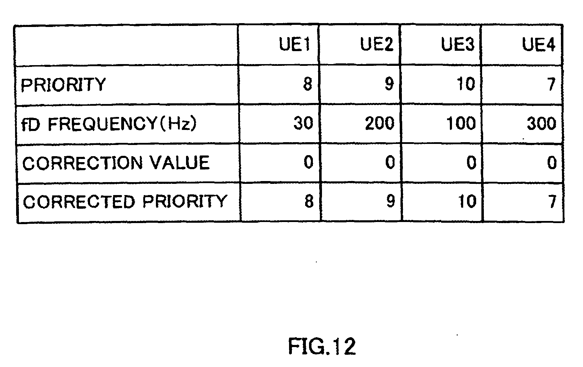

Next, the operation of the base station apparatus according to the present embodiment creating the schedule will be described. FIG. 12 is a view showing an example of the priority in order of which the base station apparatus of the present embodiment transmits packets of data. In FIG. 12, the priority is determined from values such as CIRs indicating the transmission path conidtions. For example, it is assumed that the priority for data to be transmitted to UE1 is "8", the priority for UE2 is "9", the priority for UE3 is "10", and the priority for UE4 is "7". Furthermore, data for UE4 is data to be retransmitted. Yet further, it is assumed that the Fading Doppler frequency of UE1 is 30 Hz, the Fading Doppler frequency of UE2 is 200 Hz, the Fading Doppler frequency of UE3 is 100 Hz, and the Fading Doppler frequency of UE4 is 300 Hz.

The schedule creating section 1102 determines whether to correct the priority from the Fading Doppler frequency of a communication terminal apparatus to which to transmit to-be-retransmitted data. Here, the Fading Doppler frequency of UE4 to which to transmit to-be-retransmitted data is 300 Hz. The schedule creating section 1102 determines that the Fading Doppler cycle is shorter than half the unit of transmit-time and that the change in the transmission path conidtion is very rapid, and does not correct the priority to be used in creating a schedule based on the Fading Doppler frequency.

As a result, the schedule creating section 1102 creates a schedule to transmit packets of data in the order of UE3, UE2, UE1, and UE4.

According to the base station apparatus of the present embodiment, when the Fading Doppler frequency is so high that the cycle of the change in the transmission path conidtion is shorter than the data transmit interval, by determining the order in which to transmit data regardless of the Fading Doppler frequency, it is prevented that data is vainly preferentially transmitted at a timing when the transmission path conidtion is poor, and only when being effective, the transmit priority is raised, thereby being able to improve throughput.

In the description of the present embodiment, the Max CIR scheme is used which selects a user whose the transmission path condition (determined based on, for example, results of measuring CIRs) is best and transmits, but, not being limited to this, another packet assigning scheme may be used such as a round robin scheme that assigns packets to users evenly in order of user number.

Note that the common channel explained above, not being limited to any, need only be a channel shared by a plurality of communication terminal apparatuses and used to receive packet data, and the present invention can be applied to DSCH and HSDPA.

Moreover, the above schedule creating sections can be provided in apparatuses other than base station apparatuses, and can be used in any apparatuses that transmit packet data on a common channel and that control such transmission. For example, an apparatus of higher level than a base station apparatus such as RNC may be provided with the above schedule creating section to notify a schedule to the base station apparatus for transmission of packet data, and that the base station apparatus may transmit packet data to communication terminal apparatuses according to the schedule.

Furthermore, the present invention is not limited to the above embodiments, but can be implemented with various modifications made therein. While the above embodiments describe the case of a base station apparatus, the present invention is not limited to this, but the communication method can be implemented as software, for example.

For example, it is alternatively possible that a program to perform the above communication method is stored beforehand in ROM (Read Only Memory) and a CPU (Central Processor Unit) executes the program.

Further alternatively, it is possible that a program to perform the above communication method is stored in a storage medium readable for a computer, the program stored in the storage medium is then installed in RAM (Random Access Memory), and the computer operates according to the program.

As obvious from the above description, according to the scheduling apparatus and communication method of the present invention, the order in which to transmit packet data is determined based on the changes in the transmission path conidtions, and thus throughput can be improved.

The present description is based on Japanese Patent Application No. 2002-158190 filed on May 30, 2002, which is herein incorporated by reference.

### INDUSTRIAL APPLICABILITY

The present invention is suitable to use for radio communication apparatuses.

## Claims

1. A scheduling apparatus which creates a schedule for a base station apparatus to transmit packet data on a common channel to one or more communication partners, said scheduling apparatus comprising:
a detecting section that detects changes in corresponding transmission path conidtions; and
a scheduling section that determines order in which to transmit packet data based on the changes in said transmission path conidtions.

2. The scheduling apparatus according to claim 1, wherein said scheduling section determines an order at which to transmit packet data to be retransmitted, from a corresponding transmission path conidtion.

3. The scheduling apparatus according to claim 2, wherein said scheduling section determines an order at which to transmit packet data to be retransmitted within a specified time.

4. The scheduling apparatus according to claim 1, wherein said scheduling section creates a schedule to transmit packet data earlier to a communication partner whose transmission path conidtion changes rapidly and later to a communication partner whose transmission path conidtion changes slowly.

5. The scheduling apparatus according to claim 1, wherein said scheduling section does not take into account change in a transmission path conidtion when determining order in which to transmit packet data if the change in the transmission path conidtion is more rapid than a predetermined speed.

6. The scheduling apparatus according to claim 1, wherein said detecting section detects change in a transmission path conidtion by measuring a Fading Doppler frequency.

7. The scheduling apparatus according to claim 1, wherein said detecting section detects change in a transmission path conidtion by measuring change in receive quality of a signal transmitted from a communication partner.

8. A control station apparatus comprising:
a scheduling apparatus according to claim 1; and
a transmit section that transmits packet data according to a schedule created by said scheduling apparatus.

9. A base station apparatus comprising:
a scheduling apparatus according to claim 1; and
a transmit section that transmits packet data according to a schedule created by said scheduling apparatus.

10. A communication system comprising:
a scheduling apparatus according to claim 1.

11. A schedule creating method which creates a schedule for a base station apparatus to transmit packet data on a common channel to one or more communication partners, said method comprising:
detecting changes in corresponding transmission path conidtions;
determining order in which to transmit packet data based on the changes in said transmission path conidtions; and
transmitting the packet data according to said transmit order.
